# EUROPEAN PATENT APPLICATION

(11) **EP 1 528 494 A1**
(43) Date of publication of application: **04.05.2005**
(21) Application number: 04024088.9
(22) Date of filing: 08.10.2004
(51) Int. Cl.: G06F 17/60

(54) **Automatic supplier sourcing**

(30) Priority: 30.10.2003 US 696972
(71) Applicant: MICROSOFT CORPORATION, Redmond, Washington 98052 (US)
(72) Inventor: Sorensen, Carsten, Redmond Washington 98052 (US)
(74) Representative: Grünecker, Kinkeldey, Stockmair & Schwanhäusser Anwaltssozietät

(57) **Abstract**

The present invention automates the process by which requests for quotation are generated by manufacturers to suppliers. An RFQ engine resides on a manufacturers computer system and is used to generate a request for quotation (RFQ) template. The template describes the service or goods to be supplied by the suppliers. When the RFQ template is finalized, it is saved in a pre-designated storage space on the manufacturer's computer system and is indexed on an RFQ index mapping which is accessible by suppliers.

## Description

### BACKGROUND OF THE INVENTION

The present invention deals with automated business processing. More specifically, the present invention deals with the automatic identification of suppliers for sourcing business requests.

In many manufacturing or other business settings, a company, in order to deliver its product, outsources a wide variety of services to other companies, and also purchases a wide variety of inventory from other companies. For example, a bicycle manufacturer may actually only perform assembly steps in manufacturing a bicycle. In order to perform these steps, the bicycle manufacturer outsources bicycle frame construction services to a frame builder, and also outsources painting services to a painting company. Similarly, the bicycle manufacturer purchases all components of the bicycle (such as wheels, tires, brakes, deraileurs, seats, headsets, bottom brackets, and other desired accessories or parts) from wholesale sellers of those parts.

In outsourcing the purchase requests and service requests to other companies, current manufacturers undergo a fairly complex and cumbersome process. First, the manufacturer must contact a plurality of different suppliers for each service and each part in order to obtain a competitive bid for the parts or services being outsourced. The manufacturer may generally request written bid and delivery information from the suppliers. This requires the manufacturer to transmit specifications or at least a detailed description of the job or parts desired, to all of the different suppliers which require such a description to fill the requested orders. Each supplier must then do its best to respond to the requested bid, identifying as best it can, those specific items which will be considered in awarding the bid to a given supplier. Each of the written proposals from the suppliers must then be received by the manufacturer and then be evaluated, based on award criteria, in order to award the job to one of the plurality of suppliers for each service and each item to be purchased. Needless to say, this is extremely time consuming and labor intensive for the manufacturer, and it can be extremely time consuming and labor intensive for each of the suppliers.

As a result, a manufacturer may not have sufficient time to request bids from as many qualified suppliers as it would like. In fact, in many situations, the manufacturer does not have enough time to even solicit a competitive bid by supplying a request to more than one supplier. Instead, the manufacturer simply requests a single supplier, time-after-time, for its best price. If the supplier realizes that it is not in a competitive situation, the price may be artificially elevated to the manufacturer.

Similarly, the present system can create critical scheduling difficulties. For example, in the bicycle manufacturer example discussed above, assume that the frame builder will be three days late in delivering the frames to the bicycle manufacturer. Assume also that the painting company had originally scheduled to paint the bicycle frames on the first two days of a given month, but then has other painting jobs for other manufacturers scheduled throughout the following three weeks of the month. If the frame builder delivers the frames three days late to the painter, then the painter will not be able to paint the frames until the fourth week of the month. This will delay the ultimate delivery date of the bicycles from the manufacturer to its retailers by three weeks.

In such a situation, the process for requesting services from another frame builder may be so cumbersome that it cannot be performed within a reasonably short period of time. In that case, the bicycle manufacturer is simply forced to deliver its bicycles to its retailers nearly a month late.

### SUMMARY OF THE INVENTION

The present invention automates the process by which requests for quotation are generated by manufacturers to suppliers. An RFQ engine resides on a manufacturers computer system and is used to generate a request for quotation (RFQ) template. The template describes the service or goods to be supplied by the suppliers. When the RFQ template is finalized, it is saved in a predesignated storage space on the manufacturer's computer system and is indexed on an RFQ index mapping which is accessible by suppliers.

The suppliers are provided with RFQ reply engines which intermittently access the index mapping to determine whether there are any RFQ templates for which they wish to reply. If there are, the RFQ reply engine accesses the content of the RFQ template on the manufacturer's predesignated storage area and is used to either automatically or manually generate a reply to the RFQ template. The reply is transmitted back to the manufacturer where it is evaluated based on award criteria.

In one embodiment, the RFQ template includes filter criteria for filtering the suppliers that are authorized to respond to the RFQ template. In another embodiment, the suppliers include filter criteria in determining which RFQ templates they wish to respond to.

In another embodiment, the RFQ template generation engine automatically evaluates the RFQ replies based on the award criteria and identifies a suggested winner. The system also optionally provides for further negotiations between the manufacturer and the suggested winner before the service or parts purchase contract is awarded to the supplier. The further negotiations can involve, for example, sharing more detailed information about the job description, such as computer aided design drawings, etc. Further, the negotiations can include conventional negotiations such as with respect to price, delivery date, etc.

### BRIEF DESCRIPTION OF THE DRAWINGS

FIG. 1 is a block diagram of one illustrative environment in which the present invention can be used.
FIG. 2 is a block diagram of a prior art manufacturer/supplier communication system.
FIG. 3 is a block diagram of a manufacturer/supplier communication system in accordance with one embodiment of the present invention.
FIG. 4 is a flow diagram illustrating how a manufacturer and supplier registers in accordance with one embodiment of the present invention.
FIG. 5A is a flow diagram illustrating how an RFQ template is published in accordance with one embodiment of the present invention.
FIG. 5B is one illustrative example of an RFQ template.
FIG. 6 is a flow diagram illustrating how a supplier replies to a published RFQ template.
FIG. 7 is a flow diagram illustrating one embodiment of how the RFQ replies are evaluated.

### DETAILED DESCRIPTION OF ILLUSTRATIVE EMBODIMENTS

The present invention deals with an automated system by which requests for services and parts can be published, replied to, and awarded. However, before describing the present invention in greater detail, one exemplary environment in which the present invention can be implemented is discussed.

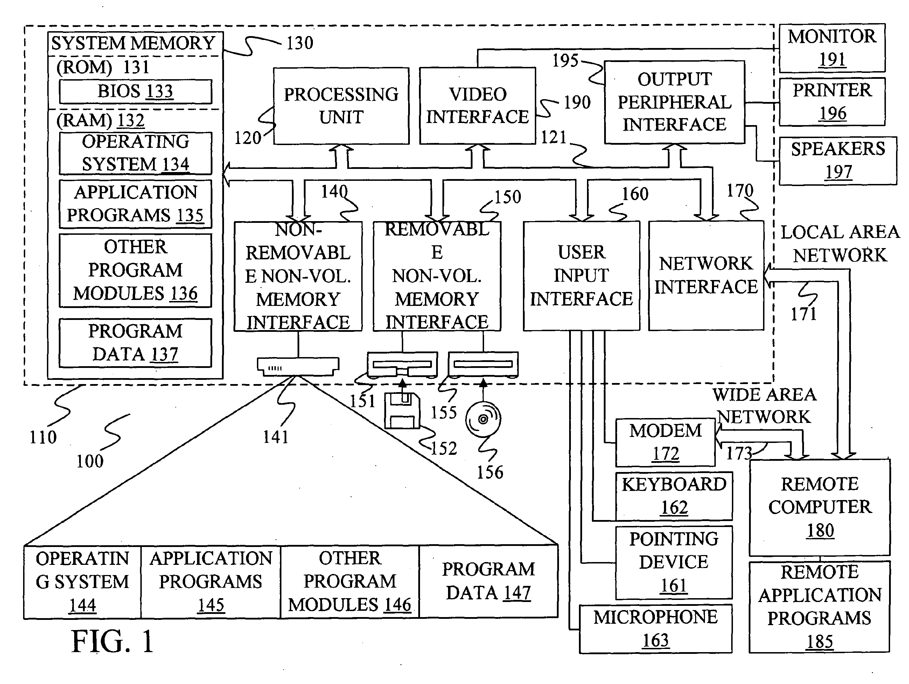

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 100. Communication media typically embodies computer readable instructions, data structures, program modules or other data in a modulated data signal such as a carrier WAV or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way o example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

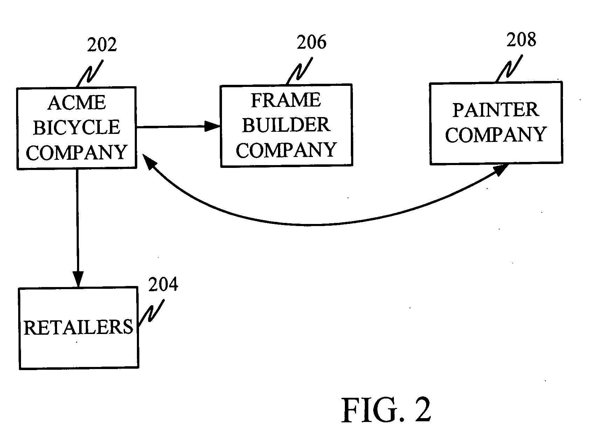

FIG. 2 is a block diagram of one embodiment of a prior art manufacturer and supplier communication system. As is briefly described in the background section, the exemplary system shown in FIG. 2 includes a manufacturer (ACME Bicycling Manufacturing Company) 202 which manufactures and sells bicycles to a plurality of bicycle retailers 204. In doing so, manufacturer 202 outsources frame-building services to a supplier (Frame Builder Company) 206. Such services may include, for example, the manufacture and welding of frames.

FIG. 2 also shows that manufacturing company 202 outsources painting services to a second supplier (Painter Company) 208. For instance, the frame building supplier 206 provides welded frames to manufacturer 202, which then provides the unpainted frames to supplier 208 where the frames are painted and then returned to manufacturer 202 for assembly and shipment to retailers 204.

In manufacturing the bicycles, company 202 conventionally seeks requests for services and parts from its suppliers (such as frame builder 206 and painter 208). As described in the background portion, this can be a cumbersome and time consuming process, and it can be difficult to compare bids from different suppliers. It can also lead to critical scheduling difficulties which can undesirably delay delivery of bicycles from manufacturer 202 to retailers 204. Similarly, it can lead to artificially elevated prices being quoted from suppliers 206 and 208 to manufacturer 202, thus undesirably increasing the price of the bicycles delivered to retailers 203, or undesirably reducing the margin realized by the sales of bicycles from manufacturer 202 to retailers 204.

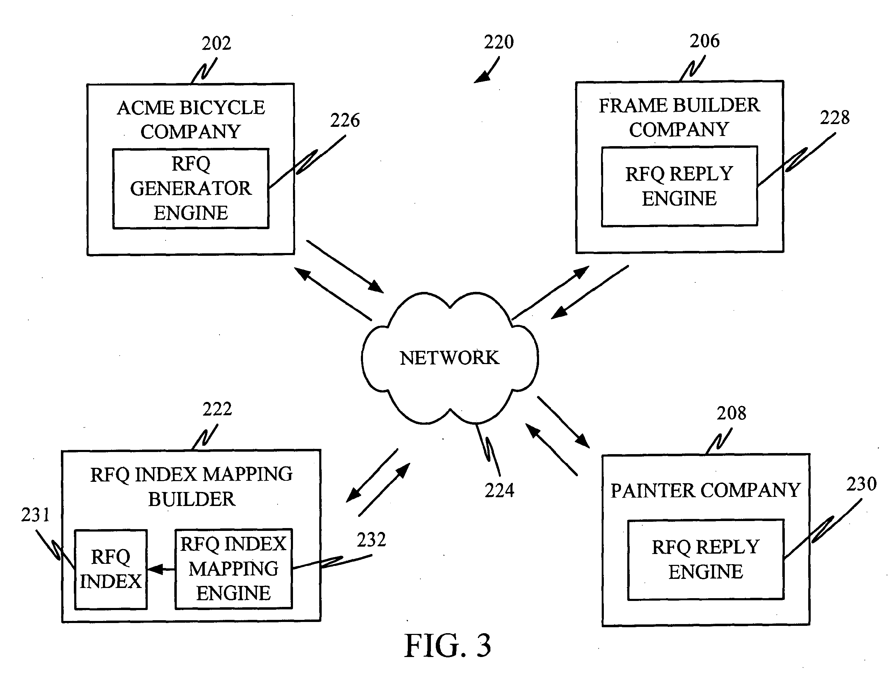

FIG. 3 is a block diagram of the manufacturer/supplier system shown in FIG. 2, in accordance with one embodiment of the present invention. FIG. 3 shows system 220 which includes bicycle manufacturer 202, frame builder 206 and painter 208, along with an RFQ index mapping builder 222. The components of the system 220 shown in FIG. 3 are illustratively connected by a network 224, which can be a global network (such as the internet) or another network. FIG. 3 also shows that bicycle manufacturer 202 includes an RFQ generator engine 226. As is described in greater detail below, engine 226 is used in generating and publishing RFQ templates for reply by suppliers 206 and 208. Each of suppliers 206 and 208 include an RFQ reply engine 228 and 230, respectively. The RFQ reply engines 228 and 230, as is described in greater detail below, are used to generate replies to RFQ templates published by manufacturer 202 and transmit those replies to manufacturer 202 for evaluation.

FIG. 3 also shows that system 220 includes RFQ index mapping builder 222. Builder 222 includes an RFQ index mapping engine 232. Engine 232, as is described in greater detail below, indexes in index 231 RFQ templates generated by manufacturers (such as manufacturer 202).

It should be noted that FIG. 3 only shows a single manufacturer 202 and two suppliers 206 and 208. However, it will be appreciated that, in accordance with one embodiment of the present invention, a plurality of different manufacturers of the same goods or of different goods, can also be part of the system. Similarly, a wide variety of different service providers can be part of the system as well. However, the present invention is described with respect to a single manufacturer 202 and two different suppliers 206 and 208, simply for the sake of clarity and simplicity.

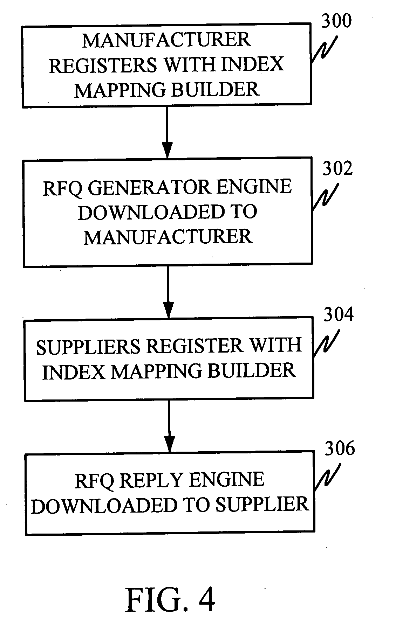

FIG. 4 is a flow diagram illustrating how manufacturers and suppliers become part of the system shown in FIG. 220. Manufacturers, such as manufacturer 202, first register with index mapping builder 222. This can be done by simply opening a network connection to builder 222 and selecting a registration screen through which manufacturer 202 provides required registration information to builder 222. This is indicated by block 300 in FIG. 4.

Some exemplary registration information can include a description, such as a SIC code which generally describes the manufacturer 202. In addition, the manufacturer may be asked to input a textual description of what the manufacturer does or choose such a description from a drop down menu. The manufacturer may also be requested to input an address, areas of expertise, the types of goods or services provided by the manufacturer and the types of goods or services outsourced by the manufacturer.

Manufacturer 202 may also optionally be provided with the opportunity to input preliminary filtering criteria. For example, the manufacturer 202 may only desire that services or goods be outsourced from suppliers within a certain geographic area. This information can be set up in a profile or registration template for manufacturer 202 such that only suppliers within that geographic region will respond to RFQ templates published by supplier 202. Of course, a wide variety of other preliminary filtering criteria can be input by manufacturer 202 as well. For instance, the manufacturer can filter on selected suppliers, so that only selected suppliers will see (or have access to) the RFQ template. This is discussed in greater detail below.

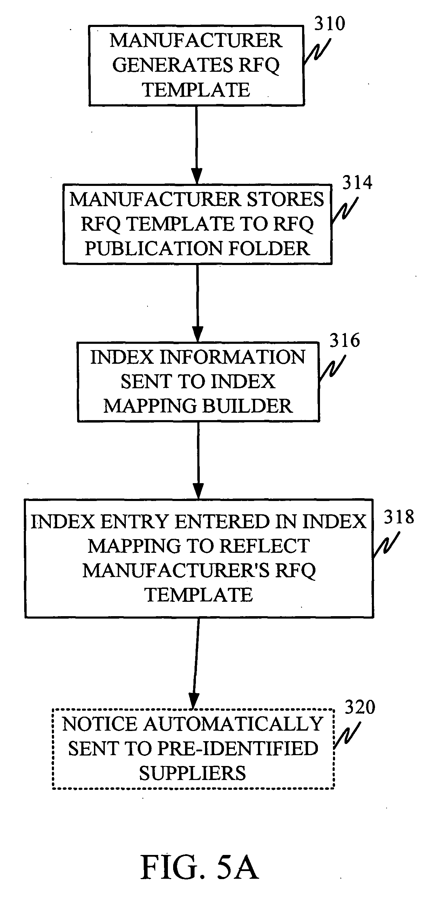

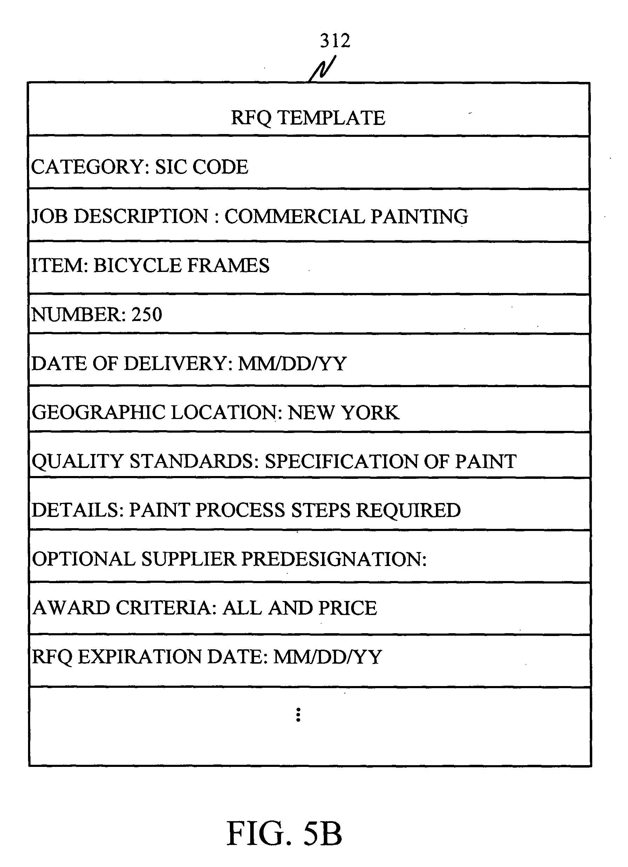

Upon receiving the desired registration information, RFQ index mapping builder 222 downloads to manufacturer 202 the RFQ generator engine 226. This is indicated by block 302 in FIG. 4. As is described later with respect to FIGS. 5A and 5B, engine 226 is used to generate and publish RFQ templates for manufacturer 202.

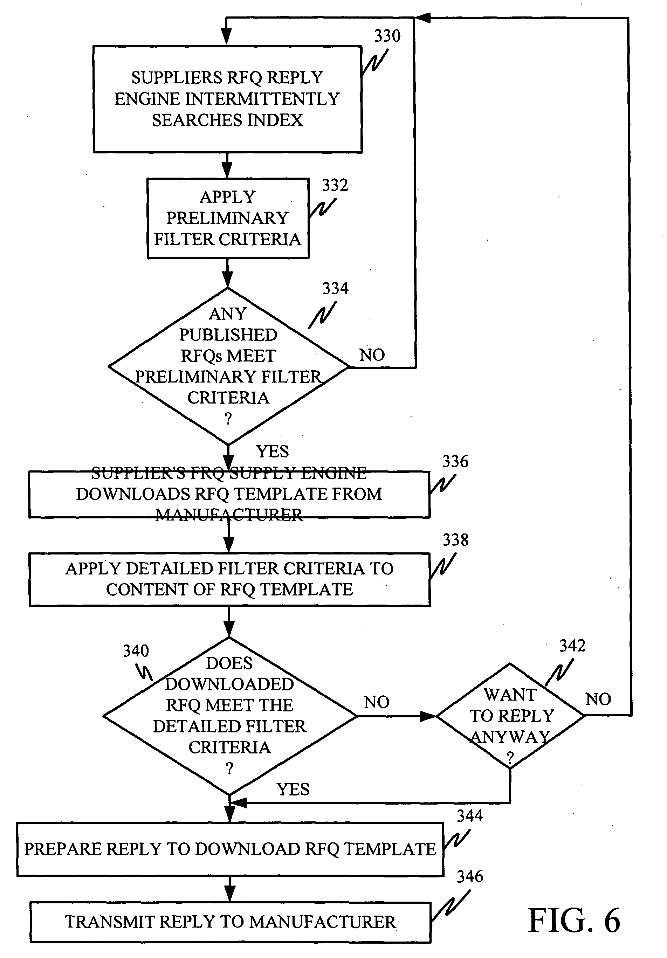

Suppliers 206 and 208 can also become part of system 220 by registering with RFQ mapping builder 222. In doing so, suppliers 206 and 208 will also illustratively establish a network connection to builder 222 and access a registration page which indicates the type of information required in order to register into system 220. Again, the registration information may illustratively include identifying information which identifies the supplier and the types of goods or services provided by the supplier, address or geographic location information indicating where the supplier is located, etc. Similarly, the supplier may optionally be provided with an opportunity to provide preliminary filtering information as well. In that case, again as is described later with respect to FIG. 6, the supplier will only be notified of indexed RFQ templates which meet the preliminary filtering criteria. In any case, registration of the supplier with builder 222 is indicated by block 304 in FIG. 4.

Once the suppliers 206 and 208 have registered with builder 222, builder 222 downloads RFQ reply engines 228 and 230, respectively to the suppliers. This is indicated by block 306 in FIG. 4. The RFQ supply engines 228 and 230 are used, as is described with respect to FIG. 6, to generate replies to RFQ templates indexed at RFQ index mapping builder 222.

FIG. 5A is a flow diagram illustrating one embodiment in which manufacturers (such as manufacturer 202) generates and publishes an RFQ template for response by suppliers 206 and 208. FIG. 5B is one illustrative embodiment (which is exemplary only) of an RFQ template 312 generated by manufacturer 202.

In order to have suppliers 206 and 208 quote on jobs for providing parts or services to manufacturer 202, manufacturer 202 first generates an RFQ template. This is indicated by block 310 in FIG. 5A. The RFQ template defines the job or goods required by manufacturer 202 in sufficient detail that they can be quoted by suppliers 206 and 208. One exemplary RFQ template is illustrated at 312 in FIG. 5B. The exemplary RFQ template 312 may be stored, for example, as a spread sheet-type document, a word processor-type document, or any other desired document which can be easily responded to by a supplier. The template 312 shown in FIG. 5B includes a category of the job (which can be described using for example a SIC code, one of any other of the various standards for describing the services or products of a company, or a textual description or one chosen from a drop down menu). RFQ template 312 also illustratively includes a job description which is a textual description of the job or parts being requested.

A number of other items can also be included for describing the type of services of goods for which a quotation is being sought. Template 312, in the example of the bicycle manufacturer seeking painting services, includes an item description which identifies the items to be painted, the number of items to be painted, the date of delivery required for those items, a geographic location of the manufacturer, quality standards which are to be met by the supplier, and any other desired details (such as the specific paint process steps required to complete the job). The template 312 can also include an optional supplier pre-designation (described in greater detail below), the award criteria upon which the job will be awarded, the RFQ expiration date, and any other desired fields can be included as well. In addition, the templates can be stored in any desired format (such as a word processing document or other format). The template can then be re-used, modified or enhanced.

The optional supplier pre-designation field can be used as a preliminary filter placed on the RFQ template by the manufacturer. For instance, the manufacturer may have three painting suppliers which it has authorized for use on its bicycle frames. Thus, the manufacturer may identify (such as by registration number or other identification number) the three painting suppliers who are authorized to respond to the RFQ template 312. In that case, the RFQ reply engine 230 at the painting suppliers will execute preliminary filtering operations on the RFQ template and will not respond if they are not included on the optional supplier pre-designation field of the RFQ template being processed.

FIG. 5B also illustrates that the award criteria is indicated as all criteria, and price. This indicates that the manufacturer will award the contract to the supplier based on its evaluation of all mentioned criteria, and including price. Of course, specific criteria can be listed as well. For instance, if the manufacturer is not as sensitive about delivery date as it is about color, the manufacturer may indicate that in the award criteria field. Many other or different fields can be included in an RFQ template as well, and template 312 is illustrated for exemplary purposes only.

While RFQ templates have been used in the past, they have not been used in highly efficient ways. Therefore, in accordance with one embodiment of the invention, once the manufacturer has generated an RFQ template, the manufacturer stores the RFQ template to a pre-designated folder on its local data store This is indicated by block 314 in FIG. 5A. For instance, the RFQ generator engine 226 may set up a specific RFQ publication folder which stores RFQs to be indexed and published. Once the RFQ 312 is finalized and stored to the pre-designated data store location, RFQ generator engine 226 automatically sends index information to RFQ index mapping builder 222. This is indicated by block 316. The index information can include a wide variety of different information. For example, in a very simple case, the index information simply indicates that an RFQ is being published by a manufacturer. In that case, the RFQ is simply indexed as a location of the data store from which the entire RFQ template can be retrieved by suppliers. However, in an illustrative embodiment, the index information will at least contain some additional information which can be used to perform preliminary filtering criteria. For example, the index information may include the category and job description from the template, or any other desired information.

Once the index information is received by RFQ indexing mapping engine 232, engine 232 places an index entry in RFQ index 231 to reflect the RFQ template 312 which is being published by the manufacturer 202. This is indicated by block 318.

FIG. 5A also indicates an optional step that can be taken. For instance, if the manufacturer 202 has identified suppliers in the optional supplier pre-designation field, then RFQ index mapping engine 232 can take additional steps in addition to placing an entry in RFQ index 231 reflecting the RFQ template. Engine 232 can affirmatively notify the pre-designated suppliers that an RFQ has been published with those suppliers listed as pre-designated suppliers. This is indicated by block 320, and may facilitate a quicker reply to the published RFQ template. It should also be noted, of course, that RFQ generator engine 226 at the manufacturer 202 can directly notify the pre-designated suppliers as well.

FIG. 6 is a flow diagram illustrating one embodiment of the operation of RFQ supply engines 228 and 230, respectively. The discussion will proceed with respect to RFQ reply engine 228, but it will be noted that other RFQ reply engines will operate in a similar manner.

RFQ reply engine 228 is configured to intermittently access index 231 through network 224. When the index 231 is accessed, engine 228 searches the index for RFQ templates which are published, and to which supplier 206 whishes to reply. This is indicated by block 330 shown in FIG. 6. The search of index 231 can be conducted through engine 232, or through any other suitable searching techniques. In one embodiment, the index 231 is arranged hierarchically, or categorically, to enable more precise and efficient searching to be performed by supplier 206.

Once reply engine 228 has accessed index 231, and identified RFQ templates which have been published since its last search, it applies any preliminary filtering criteria to the information which is contained in index 231. This is indicated by block 332 in FIG. 6. For instance, as mentioned previously, the preliminary filtering criteria may indicate that the supplier 206 wishes to only reply to RFQ templates published for certain job categories, or in a certain geographic area, or based on any other information which is indexed in index 231.

Reply engine 228 then determines whether any of the published RFQ templates meet the preliminary filtering criteria which were applied in block 332. This is indicated in block 334. If not, then reply engine 228 determines that no RFQ templates have been published since its last search which meet the preliminary filter criteria. Therefore, supplier 206 does not wish to reply to any of the published RFQ templates indexed in index 231, and processing simply reverts to block 230.

If, however, reply engine 228 determines that one or more RFQ templates indexed in index 231 meet the preliminary filter criteria applied, then reply engine 228 accesses the RFQ template at the predetermined data store location on the data store at manufacturer 202, and downloads the RFQ template from the manufacturer's data store. This is indicated by block 336.

Upon receiving the entire RFQ template from the manufacturer, reply engine 228 illustratively applies more detailed criteria to the content of the RFQ template downloaded. This is indicated by block 338 in FIG. 6. For instance, even though a relatively small amount of information may be indexed in index 231, so that a relatively small number of preliminary filter criteria can be applied, the supplier 206 may well wish to refrain from replying to RFQ templates based on a host of additional detailed filter criteria. For instance, supplier 206 may have a list of manufacturers with which it will not do business, based on past business dealings. Those can be included in the preliminary or detailed filter criteria. Similarly, if geographic location is not indexed, the supplier may still wish to filter RFQ templates for reply based on the geographic location of the manufacturer. For instance, if the supplier is a supplier of janitorial services in Baltimore, MD it may well wish to refrain from replying to RFQ templates generated requesting quotations for janitorial services in San Francisco, CA. If the geographic location of the manufacturer is not indexed, the RFQ templates can be filtered based on detailed filter criteria which contains the geographic location information. A wide variety of other detailed filter criteria can be used as well, limited only by desires of the users of the system.

Reply engine 228 then determines whether the downloaded RFQ template meets the detailed filter criteria established by the supplier. This is indicated by block 340 in FIG. 6. If not, the supplier may wish to respond anyway. For instance, if the RFQ template indicates a geographic region which is only slightly outside of the service area of the supplier, but the supplier determines that the business may be advantageous for it, it will optionally be given an opportunity to override a rejection of the RFQ template and respond to the RFQ template, even though it does not meet all of the detailed filter criteria established by the suppler. This is indicated by block 342. If the supplier still does not want to reply to the RFQ template, then processing returns to block 330.

However, if at block 340 it is determined that all of the filter criteria are met by the RFQ template, or at block 342 that the supplier wishes to respond to the RFQ template even though all of the detailed filter criteria were not met, then the RFQ reply engine 228 is used to prepare a reply to the downloaded RFQ template. This is indicated by block 344 in FIG. 6. Responding to the RFQ template will, of course, vary widely depending on the type of information requested on the RFQ template. However, some replies can easily be automatically be generated. For instance, if the RFQ template is simply seeking a quotation for an item which a supplier provides at a fixed price, the reply to the RFQ template can be generated automatically. One such illustration of this type of reply is, for example, if the manufacturer is simply requesting a price quotation for 1000 D-cell batteries from a battery supplier. The battery supplier may have standard prices for quotations of 1000 D-cell batteries, and thus the RFQ reply engine 228 can simply fill out the price and delivery terms associated with the RFQ template automatically, with no human intervention.

Alternatively, the reply can be generated through manual intervention. In one embodiment, the reply includes the criteria from RFQ template and an indication as to whether the supplier can meet the criteria of any proposed modifications to the criteria. The reply may also include different or additional information as well.

Once the RFQ reply has been created by RFQ reply engine 208 (either manually or automatically) it is transmitted to manufacturer 202. This is indicated by block 346 in FIG. 6. RFQ generator engine 226, or another component of manufacturer 202 can then be used to receive and evaluate the RFQ replies received from suppliers.

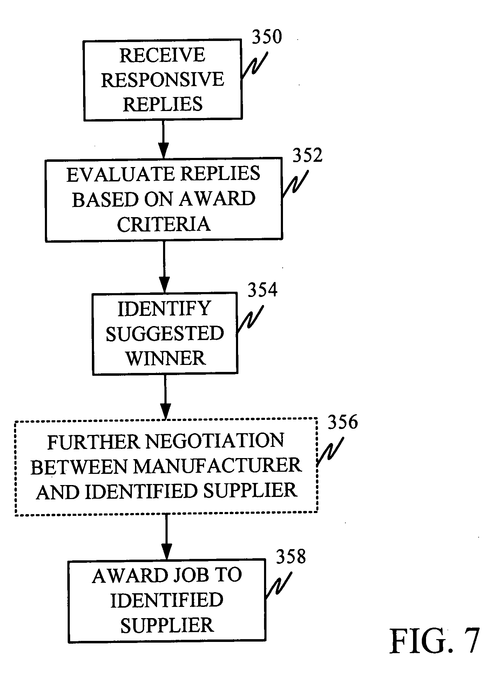

FIG. 7 is a flow diagram illustrating the processing and evaluation of RFQ replies at manufacturer 202 in accordance with one embodiment of the present invention. First, engine 226 (or another component of manufacturer 222) receives the responsive RFQ replies. This is indicated by block 350 in FIG. 7.

Next, engine 226 (or another component of manufacturer 202 or a person at manufacturer 202) evaluates the replies received, based upon the award criteria listed in the RFQ template 312. This is indicated by block 352. This can take place in a variety of different ways. For instance, all of the RFQ replies can be stored or accumulated until the RFQ expires. Then, the specific award criteria listed in the RFQ template can be automatically compared against fields identifying those criteria in the RFQ replies. By contrast, each RFQ template can be automatically evaluated and scored as it is received. In either case, evaluation of the RFQ replies is illustratively based upon the award criteria listed in the RFQ template, and those award criteria can be weighted, as desired by the manufacturer. For instance, one manufacturer may weight price heavier than delivery date, while another manufacturer may weight delivery date heavier than price. Of course, a wide variety of different weighting techniques can be used, as desired by the manufacturer.

In any case, the manufacturer (either manually or with engine 226) eventually identifies a suggested winner based upon the evaluation performed at block 352. This is indicated by block 354 in FIG. 7.

Having identified a suggested winner, the manufacturer 202 may still wish to engage in additional negotiations with the suggested winning supplier 206. For instance, the supplier may have responded to the RFQ template without specifying some type of criteria requested in the RFQ template, or by quoting a criterion which does not fully comply with the desires of the manufacturer. In that case, the manufacturer may engage in further negotiations requesting a lower price or requesting that the supplier more closely meet the desired criteria.

Similarly, the suggested winning supplier may have contingently specified a reply, based on upon receiving more detailed information describing the job for which the quote was sought. Thus, the manufacturer may share additional details with the suggested winning supplier, such as computer aided design (CAD) drawings, more detailed specifications, etc., prior to awarding a contract to the suggested winning supplier. The CAD drawings, detailed specification files etc. can be shared online. Further, instant messaging and speech can be used as well. The further negotiation between manufacturer 202 and the suggested winning supplier 206 is, of course, optional, and is indicated by block 356 in FIG. 7.

When all negotiations are complete, the manufacturer 202 awards the job to the identified supplier. This is indicated by block 358.

The present invention thus provides significant advantages over prior systems for identifying suppliers. First, a large majority of the process for identifying suppliers is performed automatically and can thus be done very quickly and without cumbersome, manually intensive operations. Therefore, in the event that a supplier who has already been chosen indicates that it is unable, for whatever reason, to meet the previously quoted job, the manufacturer can quickly and efficiently find another supplier to fill in, without undertaking cumbersome and time consuming manual processes.

Similarly, the present invention allows a manufacturer to enable a large number of suppliers to bid on jobs, without the corresponding increase in manual processes required to obtain and evaluate the bids. The present invention also allows suppliers to identify manufacturers for which it can supply goods and services, where it would otherwise be unable to identify those manufacturers. If the manufacturer is part of system 220, any supplier that is part of system 220 may be able to identify that manufacturer as a potential customer. It should also be noted that the templates are illustratively stored locally, so there is no need to upload files to an electronic market place, but instead the files are shared in a peer-to-peer fashion.

In addition, various embodiments of the present invention allow manufacturers to filter the suppliers which can respond to an RFQ template. Some embodiments also allow suppliers to filter the manufacturers or RFQ templates to which they will reply. This renders the process of seeking, and replying to, RFQ templates, quick and efficient for both the manufacturer and the suppliers.

Although the present invention has been described with reference to particular embodiments, workers skilled in the art will recognize that changes may be made in form and detail without departing from the spirit and scope of the invention.

## Claims

1. A computer implemented method of responding to a request for a supplier quotation indicative of terms for delivery of goods or services by the supplier, the method comprising:
accessing an index of requests for supplier quotations, the requests for supplier quotations being generated by at least one requester;
identifying a request for a supplier quotation for reply;
retrieving the identified request for a supplier quotation from a data store at the requester; and
generating a reply to the retrieved request for a supplier quotation.

2. The computer implemented method of claim 1 wherein identifying a request for a supplier quotation comprises:
filtering entries in the index of requests for supplier quotations based on supplier filter criteria; and
identifying the identified request for a supplier quotation as a request for a supplier quotation that meets the supplier filter criteria.

3. The computer implemented method of claim 1 and further comprising:
after retrieving the identified request for a supplier quotation, applying detailed supplier filter criteria to the retrieved request for a supplier quotation based on a content of the retrieved request for a supplier quotation.

4. The computer implemented method of claim 3 wherein generating a reply, comprises:
generating a reply to the retrieved request for a supplier quotation only if it meets the detailed supplier filter criteria.

5. The computer implemented method of claim 1 and further comprising:
transmitting the reply to the requester that generated the retrieved request for a supplier quotation.

6. The computer implemented method of claim 1 wherein generating the reply comprises:
accessing content of the retrieved request for a supplier quotation; and
generating the reply based on the content of the request for a supplier quotation.

7. The computer implemented method of claim 6 wherein generating the reply comprises:
automatically generating the reply based on the content of the request for a supplier quotation.

8. The computer implemented method of claim 1 wherein accessing the index, comprises:
accessing the index over a global computer network.

9. The computer implemented method of claim 1 wherein retrieving the identified request for a supplier quotation, comprises:
retrieving the identified request for a supplier quotation from the data store at the requester over a global computer network.

10. The computer implemented method of claim 1 and further comprising:
prior to accessing the index, providing supplier registration information to a registration component; and
downloading a reply engine, the reply engine accessing the index.

11. A computer implemented method of soliciting a response to a request for supplier quotation, the request for a supplier quotation being generated by a requester and including job information indicative of terms for delivery of goods or services from a supplier to the requester, the method comprising:
entering the job information into a predetermined request for a supplier quotation template;
saving the request for a supplier quotation template at a predetermined location in a data store local to the requester, such that the request for a supplier quotation template is exposed for downloading to a supplier for generation of a reply; and
sending indexing information for computer implemented indexing of the request for a supplier quotation template at a remote index.

12. The computer implemented method of claim 11 and further comprising:
prior to entering the job information, providing supplier registration information to a registration component; and
downloading a request for a supplier quotation generation engine, the request for a supplier quotation generation engine sending the indexing information.

13. The computer implemented method of claim 11 wherein entering the job information comprises:
entering requester filter criteria indicative of suppliers authorized to reply to the request for a supplier quotation template.

14. The computer implemented method of claim 11 wherein sending indexing information comprises:
sending requester filter criteria indicative of suppliers authorized to reply to the request for a supplier quotation template.

15. The computer implemented method of claim 11 and further comprising:
receiving a reply to the request for a supplier quotation template from a supplier.

16. The computer implemented method of claim 15 wherein entering the job information comprises:
entering award criteria indicative of criteria considered in awarding a job corresponding to the request for a supplier quotation to a supplier.

17. The computer implemented method of claim 16 and further comprising:
evaluating the received reply based on the award criteria; and
suggesting a winning supplier based on the evaluation of the award criteria.

18. The computer implemented method of claim 17 wherein evaluating comprises:
weighting the award criteria according to a predetermined weight.

19. A computer implemented method of indexing requests for supplier quotations, each of the requests for supplier quotations being generated by a requester and including job information indicative of terms for delivery of goods or services from a supplier to the requester, the method comprising:
receiving indexing information from the requesters, the indexing information being indicative of the requests for supplier quotations; and
entering an entry for each request for a supplier quotation in an index based on the index information, the entry being indicative of a category of a corresponding request for a supplier quotation and a location of the corresponding request for a supplier quotation on a data store at the requester, the index being exposed to access by suppliers.

20. The computer implemented method of claim 19 wherein entering an entry comprises, for each entry in the index, including filter criteria accessible by the suppliers to identify requests for supplier quotations for reply.

21. The computer implemented method of claim 19 wherein receiving the indexing information includes receiving an identifier of a specific supplier.

22. The computer implemented method of claim 21 and further comprising:
notifying the specific supplier that a request for a supplier quotation is indexed that identifies the specific supplier.

23. The computer implemented method of claim 19 wherein receiving indexing information comprises:
receiving the indexing information from a remote requester over a network.

24. A system for responding to a request for a supplier quotation generated by at least one requester and indicative of terms for delivery of goods or services by the supplier, the system comprising:
a request for a supplier quotation reply engine configured to access an index of requests for supplier quotations, identify a request for a supplier quotation for reply, retrieve the identified request for a supplier quotation from a data store at a requester, and generate a reply to the retrieved request for a supplier quotation.

25. The system of claim 24 wherein the request for a supplier quotation reply engine is configured to identify a request for a supplier quotation by filtering entries in the index of requests for supplier quotations based on supplier filter criteria, and identifying the identified request for a supplier quotation as a request for a supplier quotation that meets the supplier filter criteria.

26. The system of claim 24 wherein the request for a supplier quotation reply engine is further configured to, after retrieving the identified request for a supplier quotation, apply detailed supplier filter criteria to the retrieved request for a supplier quotation based on a content of the retrieved request for a supplier quotation.

27. The system claim 26 wherein the request for a supplier quotation reply engine is configured to generate a reply by generating a reply to the retrieved request for a supplier quotation only if it meets the detailed supplier filter criteria.

28. The system of claim 24 wherein the request for a supplier quotation reply engine is configured to generate the reply by accessing content of the retrieved request for a supplier quotation and generate the reply based on the content of the request for a supplier quotation.

29. A system for soliciting a response to a request for supplier quotation, the request for a supplier quotation being generated by a requester and including job information indicative of terms for delivery of goods or services from a supplier to the requester, the system comprising:
a request for a supplier quotation generation engine configured to receive the job information into a predetermined request for a supplier quotation template, save the request for a supplier quotation template at a predetermined location in a data store local to the requester, such that the request for a supplier quotation template is exposed for downloading to a supplier for generation of a reply, and send indexing information for computer implemented indexing of the request for a supplier quotation template at a remote index.

30. The system of claim 29 wherein the request for a supplier quotation generation engine is configured to receive the job information by receiving requester filter criteria indicative of suppliers authorized to reply to the request for a supplier quotation template.

31. The system of claim 29 wherein the request for a supplier quotation generation engine is configured to send indexing information by sending requester filter criteria indicative of suppliers authorized to reply to the request for a supplier quotation template.

32. The system of claim 29 wherein the request for a supplier quotation generation engine is further configured to receiving a reply to the request for a supplier quotation template from a supplier.

33. The system of claim 32 wherein the request for a supplier quotation generation engine is configured to receive the job information by receiving award criteria indicative of criteria considered in awarding a job corresponding to the request for a supplier quotation to a supplier.

34. The system of claim 33 wherein the request for a supplier quotation generation engine is further configured to evaluate the received reply based on the award criteria, and suggest a winning supplier based on the evaluation of the award criteria.

35. The system claim 34 wherein the request for a supplier quotation generation engine is configured to evaluate the received reply by weighting the award criteria according to a predetermined weight.
